# EUROPEAN PATENT APPLICATION

(11) **EP 3 196 834 A1**
(43) Date of publication of application: **26.07.2017**
(21) Application number: 15855348.7
(22) Date of filing: 26.10.2015
(51) Int. Cl.: G06Q 50/10

(54) **HINTING SYSTEM AND HINTING METHOD FOR MATCH-TYPE GAMES**

(30) Priority: 27.10.2014 KR 20140146350
(71) Applicant: Huh, Cheol Koo, Seoul 06208 (KR)
(72) Inventor: Huh, Cheol Koo, Seoul 06208 (KR)
(74) Representative: Brevalex
(86) International application number: PCT/KR2015/011326
(87) International publication number: WO 2016/068558

(57) **Abstract**

The present invention relates to a hinting system for match-type games such as baduk, chess, and Othello, and provides a hinting system for match-type games, comprising: a match progression unit respectively receiving moves from a first player and a second player, and displaying the moves on a board; a hint input unit for respectively receiving a hint, with respect to the next move of the moves, from a first observer, a second observer,... and an Nth observer (here, N is a natural number); and a hint display unit for displaying the received hint on the board. Furthermore, provided is a hinting method for match-type games, and the method for displaying a hint on a match screen comprises the steps of: (a) respectively receiving moves from a first player and a second player so as to display the same on a board; (b) respectively receiving a hint, with respect to the next move of the moves, from a first observer, a second observer,... and an Nth observer (here, N is a natural number); and (c) displaying the received hint on the board.

## Description

### Technical Field

The present invention relates to a hinting system and a hinting method for match-type games, and more particularly, to a hinting system and a hinting method for match-type games that collect hints from observers watching a match and display the hints on screens for players and the observers.

### Background Art

The games Go, Korean chess, chess, Othello, and omok are match-type games in which a user competes with another player. Recently, the development of communication and network technologies has enabled matches with other users using wired/wireless networks.

Match-type games are played by two players who take turns placing playing pieces on intersections according to the set of rules for each game.

Meanwhile, in match-type games, low-level players improve skill by receiving hints from high-level players, and multiple people can enjoy the games together by exchanging such hints. However, hinting is conventionally possible only offline, and low-level players have difficulty finding the opportunity to receive hints from high-level players in an online environment.

### <Related Document>

KR Patent Publication No. 10-2007-0039778 (April 13, 2007)

### Detailed Description of the Invention

### Technical Problem

The present invention has been made to solve the foregoing problem in which it is difficult for a user to receive hints from another user in a conventional match-type game, and an aspect of the present invention is to provide a hinting system and a hinting method that display hints from observers watching a match on screens for players and the observers to increase interest in the match-type game.

However, the technical subjects to be solved by the present invention are not restricted to the above-mentioned description, and any other technical problems not mentioned so far will be clearly appreciated from the following description by those skilled in the art.

### Technical Solution

To address the technical problem, an aspect of the present invention provides a hinting system for a match-type game including: a match progression unit configured to receive stone-placing points respectively from a first player and a second player and to display the stone-placing points on a board; a hint input unit configured to receive hints, on a next stone-placing point of the stone-placing points, respectively from a first observer, a second observer, ..., and an Nth observer (where N is a natural number); and a hint display unit configured to display the received hints on the board.

Furthermore, as a method for displaying a hint on a match screen, there is provided a hinting method for a match-type game including: (a) receiving stone-placing points respectively from a first player and a second player to display the stone-placing points on a board; (b) receiving hints, on a next stone-placing point of the stone-placing points, respectively from a first observer, a second observer, ..., and an Nth observer (where N is a natural number); and (c) displaying the received hints on the board.

Here, the hint display unit may display the hints semi-transparently or along with a number representing a hint duplication number or a hint duplication ranking.

The hints include a first hint, a second hint, ..., an Nth hint respectively received from the first observer, the second observer, ..., and the Nth observer.

Here, hints on the same stone-placing point, among the first hint, the second hint, ..., the Nth hint, are displayed differentially depending on the number of duplicate hints.

The differentiation is preferably achieved with a different level of transparency or by displaying the hints along with hint numbers.

Here, when the first player or the second player places a stone, the displayed hints are deleted from the board.

Meanwhile, the first observer, the second observer, ..., and the Nth observer may select one of the first player and the second player to whom to provide a hint.

Here, the hinting system further includes a reward provision unit to provide a reward for an observer providing a hint according to whether the hints are adopted or whether a selected player wins.

The reward may be configured variously, for example, an item, points, or the like.

Further, when any one of the first player and the second player leaves a match, the match may proceed in a manner such that a hint having a greatest number of duplicates is determined as a next stone-placing point among hints from the first observer, the second observer, ..., and the Nth observer.

### Advantageous Effects

The present invention may have the following effects.

A hinting system and a hinting method for a match-type game according to the present invention introduce a system of hinting in an offline game to an online game, thereby increasing the pleasure of the online game.

Further, an observer is allowed to participate in hinting even in the middle of a match, thus enjoying the match using spare time even in a match-type game with a long run time.

Further, a low-level player may get a hint from a high-level player, thus improving skills in a match-type game.

In addition, the hinting system and the hinting method for the match-type game according to the present invention may store and provide hint data and a game record, and thus a user may improve the user's skill by checking the hint data and the game record.

Moreover, the hinting system and the hinting method for the match-type game according to the present invention may be applied to a match broadcast, such as a Go broadcast, thus contributing to an increase in viewer ratings due to viewers' participation.

Also, competitions between hinting teams are enabled, thus promoting friendship among society members or contributing to international exchange for Go.

Further, a match between one player and a hinting team including a plurality of players is enabled, thus contributing to an improvement in skill through a professional player-guided match.

In addition, game record statistics are analyzed to identify propensities by ranks and to be used as various educational and research data.

### Brief Description of the Drawings

FIG. 1 is a block diagram of a hinting system for a match-type game according to an embodiment of the present invention;
FIGS. 2 to 4 illustrate a hint displayed on a match screen according to an embodiment of the present invention; and
FIG. 5 is a flowchart illustrating a hinting method for a match-type game according to an embodiment of the present invention.

### Mode for Carrying Out the Invention

A description of the disclosed technology is merely an embodiment for structural and functional details, and thus the scope of claims of the disclosed technology is not construed as being restricted by embodiments set forth in the description. That is, as the embodiments may be modified variously and may have diverse forms, it should be understood that the scope of claims of the disclosed technology includes equivalents to achieve the technical idea.

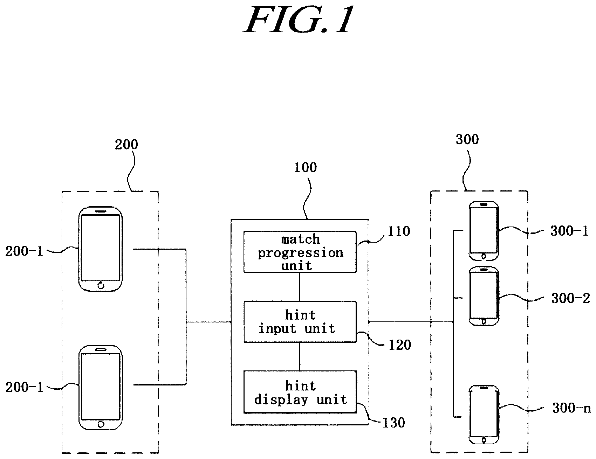

FIG. 1 is a block diagram of a hinting system for a match-type game according to an embodiment of the present invention.

Although match-type games include different kinds of games, such as Go, Korean chess, chess, Othello, and omok, Go is illustrated as an example in the present embodiment.

As illustrated in FIG. 1, the hinting system 100 for the match-type game includes a match progression unit 110, a hint input unit 120, and a hint display unit 130.

The hinting system 100 according to the present invention is configured to operate a match-type game online, and a user of the hinting system 100 may access the hinting system 100 through a personal computer (PC), a tablet PC, a smart TV, or a mobile device.

In the hinting system 100, the user may select either player 200-1 or 200-2 participating in a match to whom to give a hint or may select a simple watching mode merely to watch the match.

Meanwhile, the players may restrict the rank of an applicant for hinting in advance or may selectively accept an applicant to give a hint for the players. For example, the players may set a limit such that those having a higher rank than the players may participate in hinting, or may identify a list of applicants to give a hint for the players and may select only observers with a higher rank than the players.

According to one embodiment, the match progression unit 110 receives stone-placing points respectively from a first player 200-1 and a second player 200-2 and displays the stone-placing points on a board.

The match-type game is a game played by two players alternately placing stones or moving playing pieces, and a stone-placing point refers to a point on which a player places a stone or to which the player moves a playing piece in response to an action by an opponent.

For example, when the first player 200-1 is Black and the second player 200-2 is White, the match progression unit 110 receives a stone-placing point of Black on Black's turn to display the stone-placing point on a screen (board) and receives a stone-placing point of White on White's turn to display the stone-placing point on the screen. The match screen may be displayed simultaneously on terminals of observers 300-1 to 300-N watching the match.

The hint input unit 120 receives hints expected as a next stone-placing point respectively from a first observer 300-1, a second observer 300-2, ..., and an Nth observer 300-N.

In inputting a hint, the observers 300-1 to 300-N may be allowed to give a hint for either or both of the first player 200-1 and the second player 200-2.

For convenience of description, a hint from the first observer 300-1 is defined as a first hint, a hint from the second observer 300-2 is defined as a second hint, and a hint from the Nth observer 300-N is defined as an Nth hint.

The hint display unit 130 displays the received hints on the board.

For example, on a turn of Black 200-1 to place a stone, an observer watching the match on Black's side may input a hint on the point on which Black should place a stone, and the input hint may be displayed on the terminal of Black 200-1 and on the terminals of observers watching the match on Black's side.

Likewise, on a turn of White 200-2 to place a stone, an observer watching the match on White's side may input a hint on the point on which White should place a stone, and the input hint may be displayed on the terminal of White 200-2 and on the terminals of observers watching the match on White's side.

According to an embodiment, an input hint may be displayed on terminals of the observers watching the match both on Black's side and on White's side.

A hint displayed on the board may be displayed to be distinguished from a stone placed by a player, and is preferably displayed, for example, semi-transparently or along with a number representing a duplication ranking.

Meanwhile, when there is a duplicate hint among the first hint to the Nth hint, the duplicate hint may be displayed semi-transparently in different grades depending on the number of duplicates or along with a duplication rate expressed as a percentage (%). Therefore, the players may easily check the relative importance of a plurality of hints displayed on the board.

According to an embodiment, a hint is kept displayed on the screen until the player places a stone, and is deleted only when the player places a stone.

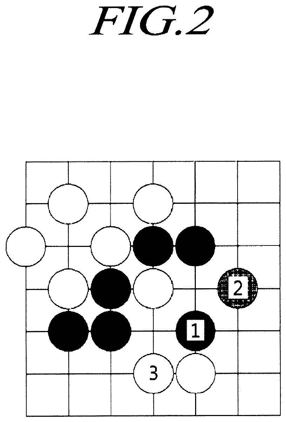

FIGS. 2 to 4 illustrate a hint displayed on a match screen according to an embodiment of the present invention.

FIG. 2 illustrates an example of displaying hints on the board on the turn of Black 200-1 to place a stone.

Each observer watching the match may input a hint on the point on which Black should place a stone on this turn by manipulating a terminal thereof. The hint input unit 120 may receive hints from the respective observers, and the hint display unit 130 may display hinting stones in different levels of transparency based on whether the input hints are duplicated.

In the drawing, stones 1, 2, and 3 have different levels of transparency. As illustrated, when hints are concentrated at position 1 and there are few hints at positions 2 and 3, stone 1 may be displayed with a lower transparency (that is, more dimly) than stones 2 and 3.

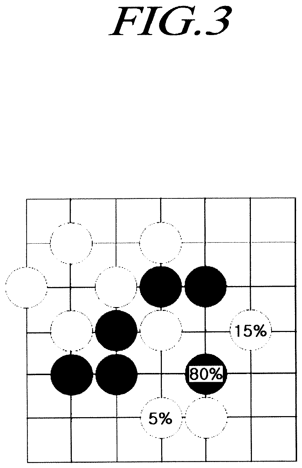

FIG. 3 illustrates another example of displaying hints on the board on the turn of Black 200-1 to place a stone.

In the present embodiment, the hint display unit 130 may display a hinting stone with the duplication rate of input hints expressed as a percentage (%) or a number representing a duplication ranking.

For example, when hints at position 1 account for 80% of all hints and hints at position 2 and 3 account for 15% and 5% thereof, respectively, the hint display unit 130 may display the corresponding numerical values at the positions of the hinting stones. Here, only the top several hints, for example, only three hints, among all hints may be displayed.

According to an embodiment, Black 200-1 may select the position of a hinting stone using a mouse or a touch on a touch screen, thereby identifying the number of observers giving the hint or information on the observer giving the hint. For example, a hint adoption rate or hint contributiveness of the observer giving the hint may be displayed on a separate window. Further, a hint duplication level by rank indicating the positions suggested by observers of a certain rank more frequently or analytical data on a winning rate may be further provided in a graph.

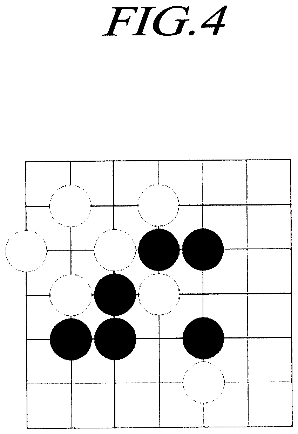

FIG. 4 illustrates that Black 200-1 places a stone on position 1 by referring to the hint. When Black 200-1 places the stone, displayed hints 2 and 3 are deleted from the match screen.

Hinting on the turn of White 200-2 to place a stone is performed in the same manner as on the turn of Black 200-1, and accordingly Black and White take turns placing stones, thereby continuing the match.

Meanwhile, the hinting system 100 according to the present invention may further include a rank management unit (not shown) to manage the rank of a user, a game record recording unit (not shown) to record the game record of a match, and a reward provision unit (not shown) to provide a reward item for a winning player and an observer providing a hint to the winning player.

When the user selects a player to open a match room, the rank management unit arranges a match by matching the user with a suitable opponent for the rank of the user.

Further, the rank management unit manages the rank of a user based on the match-winning rate and the hint-winning rate of the user. For example, when the match-winning rate or the hint-winning rate is 20% or lower in the last 10 matches, the rank management unit may decrease the rank. When the match-winning rate or the hint-winning rate exceeds 80%, the rank management unit may raise the rank. Here, a hint-winning rate only in a match in which hints exceed a minimum hint condition and a minimum hint adoption rate may be accepted.

For example, when a user provides two hints, both of which are adopted, or when the user gives only one hint in a winning match, it is unreasonable to regard these results as significant and to accept a hint adoption rate as 100 % or a hint-winning rate as 100%. That is, it is preferable to accept a hint-winning rate or a hint adoption rate only in a minimum reference condition (for example, in the case of providing over 20 hints per match).

Meanwhile, the rank management unit may arrange a match between one user and a plurality of other users, as well as a match between one user and another user, based on the ranks of users.

That is, a match between one player and a plurality of observers is possible.

For example, when user 1 of rank 10 selects Black 200-1 and selects a counterpart White 200-2 as a random observer to open a match room, users of rank 10 or users set by the rank management unit to match with the corresponding rank 10 may participate in the match room as observers also serving as the player White 200-2.

In this case, among points on which the observers participating as the observers for White 200-2 place stones, the point with the highest frequency of duplication may be determined as the point on which White 200-2 is to place a stone. Alternatively, a place on which a certain number of duplicates are first made within a time limit may be determined as a stone-placing point. For example, when the time limit is 1 minute and a set number is 10, a position proposed for a stone 10 times first within 1 minute may be determined as the point on which White is to place a stone.

Placing a stone by White may be determined when the duplication ratio of one point to another point exceeds a designated threshold. For example, when the proportion of point A on the board is 50%, the proportion of point B is 20%, and a designated ratio for determining stone placing is double, 50% of point A is more than twice 20% of point B, and thus point A may be determined as the point on which White is to place a stone.

According to an embodiment, a stone-placing point may be determined by combining the foregoing methods depending on a match grade and a user configuration.

Meanwhile, according to various embodiments of the present invention, in a 1:1 match, when any one user leaves the match or gives up, it is possible to change the match to a match between one player and a plurality of observers depending on user's selection. Further, when a player leaves for a while, it is possible to change the match to a match between one player and a plurality of observers through a match assignment function. Also, the player, who has left, may return to continue the match by clicking a Continue the Match icon.

When any one player does not place a stone within a stone-placing time limit in the 1:1 match or no observer proposes a move in the 1:1 match, this may be regarded as giving up.

Meanwhile, according to various embodiments of the present invention, the rank management unit may arrange a hinting match between a plurality of users and a plurality of other users based on the ranks of users.

A hinting match between a plurality of users may be realized in various embodiments, for example, a leader match to choose Black and White representatives and a non-leader match.

In a non-leader match, for example, the rank management unit may randomly select users in the same or similar ranks among users accessing the hinting system to open a match room. The users called to the match room select Black 200-1 or White 200-2. When the users finish selection, a match starts.

Here, in inputting a stone-placing point, the point with the highest frequency of duplication may be determined as a stone-placing point, or a point on which a set number of duplicates first made within a time limit may be determined as a stone-placing point. Further, when the ratio of duplicates on position 1 to duplicates on position 2 exceeds a designated ratio, the first position may be determined as a stone-placing point.

In a leader match, a point suggested by a player set as the leader of each team is preferentially determined as the stone-placing point. That is, when a first position and a second position overlap as a stone-placing point, the point suggested by the player set as the leader is determined as a stone-placing point.

The reward provision unit provides a reward for a winning player and an observer providing a hint to the winning player.

Here, differential rewards are provided by evaluating hint contributiveness. A reward is provided in view of contributiveness grades, in which a winning frequency in a hint participation match and the rank of a counterpart player participating in hinting may be considered, and weighting based on a hint frequency and a hint adoption frequency may be applied. For example, when a user participates in hinting in a winning match, a weighting of (pure contributiveness = hint participation frequency x 0.5 + hint adoption frequency x 2) may be applied.

Various types of rewards, such as cyber cash, items, and points, may be configured.

Meanwhile, the game record recording unit records the game record of a match and hints and provides the game record and hints for users (players and observers). Thus, users may check the game record to improve users' skill.

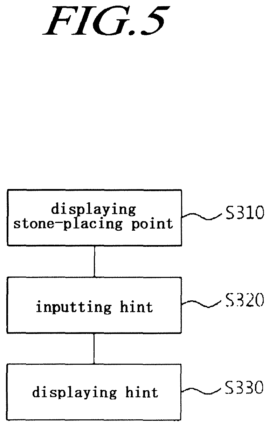

FIG. 5 is a flowchart illustrating a hinting method for a match-type game according to an embodiment of the present invention. Since an embodiment of realizing the hinting system of FIG. 1 in time series also corresponds to the present embodiment of FIG. 5, the descriptions of the match progression unit 110, the hint input unit 120, and the hint display unit 130 are applied to the present embodiment in the same manner.

Various modifications may be made to the present invention, in addition to the foregoing details.

For example, after setting a hinting priority, when any one of hinters clicks the hinting priority and places a stone on a hinting point thereof, the stone is forcedly placed on that hinting point regardless of stone-placing points proposed by other hinters or the player's intention, and the counterpart takes a turn to continue the match. When a large number of people wish to use a hinting priority, only a hinting priority first used may be applied.

Alternatively, with a hint weighting set, a difference in hint importance based on the skills of hinters may be considered. That is, a total score of " duplication number by rank " x "weighting by rank" is calculated by hinter rank with respect to each hinting point, and the top several hinting points (for example, the top three points) may be displayed in order of higher scores.

Further, when a player or a hinter wishes to know rank information (master rank, rank distribution, or the like) on hinters in each hinting point, the player or the hinter may click a View Hinter's Rank for identification.

The hinting method according to the present invention is implemented on a user terminal as an application, and some operations may be implemented in a server connected to the user terminal as necessary.

The hinting method for the match-type game according to the embodiment includes an operation S310 of displaying a stone-placing point, an operation S320 of inputting a hint, and an operation S330 of displaying a hint.

In operation S310, stone-placing points are received respectively from a first player and a second player and are displayed on a board.

Referring to FIG. 1, when the first player 200-1 is Black and the second player 200-2 is White, the match progression unit 110 receives a stone-placing point of Black on Black's turn to display the stone-placing point on a screen (board) and receives a stone-placing point of White on White's turn to display the stone-placing point on the screen. The match screen may be displayed simultaneously on terminals of observers 300-1 to 300-N watching the match.

In operation S320, hints on next stone-placing points of the stone-placing points are received respectively from a first observer, a second observer, ..., an Nth observer.

The hint input unit 120 receives hints suggested for the next stone-placing point respectively from the first observer 300-1, the second observer 300-2, ..., and the Nth observer 300-N.

In inputting a hint, the observers 300-1 to 300-N may be allowed to give a hint to either or both of the first player 200-1 and the second player 200-2.

In operation S330, the received hints are displayed on the board.

For example, on the turn of Black 200-1 to place a stone, an observer watching the match on Black's side may input a hint on the point on which Black should place a stone, and the input hint may be displayed on the terminal of Black 200-1 and on the terminals of observers watching the match on Black's side.

Likewise, on the turn of White 200-2 to place a stone, an observer watching the match on White's side may input a hint on the point on which White should place a stone, and the input hint may be displayed on the terminal of White 200-2 and on the terminals of observers watching the match on White's side.

According to an embodiment, an input hint may be displayed on terminals of the observers watching the match both on Black's side and on White's side.

A hint displayed on the board may be displayed so as to be distinguished from a stone placed by a player, and is preferably displayed, for example, semi-transparently.

Meanwhile, when there is a duplicate hint among the first hint and the Nth hint, the duplicate hint may be displayed semi-transparently in different grades depending on duplicate numbers or along with a duplication rate expressed as a percentage (%). Therefore, the players may easily refer to the importance of a plurality of hints displayed on the board. A hint is kept displayed on the screen until the players place a stone, and is deleted only when the players place a stone.

According to various embodiments, the hinting method according to the present invention may further include a rank management operation of managing the rank of a user, a match arranging operation of arranging a match between users based on the ranks of the users, an operation of providing the first player or the second player with match skill information on an observer giving a hint, and a reward-providing operation of providing a reward for a user upon winning a match.

The descriptions of the respective operations are the same as those made above with respect to the match progression unit, the rank management unit, and the reward provision unit, and thus repeated descriptions are omitted.

The foregoing hinting system and hinting method are described with reference to Go, the present invention is not limited to Go but may be applied to different forms of match-type games, such as Korean chess, chess, Othello, and omok games, and a TV broadcast system that broadcasts a match-type game.

That is, although the disclosed device has been described with reference to the embodiments illustrated in the drawings for better understanding, these embodiments are provided only for illustrative purposes. Various modifications and other equivalent embodiments may be made by those having ordinary skill in the art. Therefore, the scope of protection of the present invention should be construed as being determined by the appended claims.

### <Descriptions of Reference Numerals>

100: Hinting system
110: Match progression unit
120: Hint input unit
130: Hint display unit
200: Player terminal
300: Observer terminal

## Claims

1. A hinting system for a match-type game comprising:
a match progression unit configured to receive stone-placing points respectively from a first player and a second player and to display the stone-placing points on a board;
a hint input unit configured to receive hints, on a next stone-placing point of the stone-placing points, respectively from a first observer, a second observer, ..., and an Nth observer (where N is a natural number) ; and
a hint display unit configured to display the received hints on the board.

2. The hinting system as claimed in claim 1, wherein the hint display unit displays the hints semi-transparently on the board.

3. The hinting system as claimed in claim 2, wherein the hints are displayed in a low level of transparency depending on a number of hints on the same stone-placing point or along with a number of duplicate hints or a proportion of duplicate hints expressed as a percentage (%).

4. The hinting system as claimed in claim 1, wherein when the first player or the second player places a stone, the displayed hints are deleted from the board and are replaced by the stone placed by the player.

5. The hinting system as claimed in claim 1, wherein the first observer, the second observer, ..., and the Nth observer select one of the first player and the second player to whom to provide a hint.

6. The hinting system as claimed in claim 1, further comprising an item provision unit configured to provide an item for an observer providing a hint according to whether the hints are adopted or whether a selected player wins.

7. The hinting system as claimed in claim 1, wherein when any one or more of the first player and the second player leaves a match, the match proceeds in a manner such that a hint having a greatest number of duplicates is determined as a next stone-placing point among hints from the first observer, the second observer, ..., and the Nth observer.

8. The hinting system as claimed in claim 1, wherein the match progression unit provides match skill information on an observer giving a hint for the first player, the second player, or the observer.

9. A hinting method for a match-type game for displaying a hint on a match screen in a match-type game, the method comprising:
(a) receiving stone-placing points respectively from a first player and a second player to display the stone-placing points on a board;
(b) receiving hints, on a next stone-placing point of the stone-placing points, respectively from a first observer, a second observer, ..., and an Nth observer (where N is a natural number); and
(c) displaying the received hints on the board.

10. The hinting method as claimed in claim 9, wherein in (c), the hints are displayed semi-transparently on the board or along with a number of duplicate hints or a proportion of duplicate hints expressed as a percentage (%).

11. The hinting method as claimed in claim 10, wherein hints on the same stone-placing point among the hints are displayed in a low level of transparency depending on a number of duplicate hints.

12. The hinting method as claimed in claim 9, wherein when the first player or the second player places a stone, the displayed hints are deleted from the board and are replaced by the stone placed by the player.

13. The hinting method as claimed in claim 9, wherein the first observer, the second observer, ..., and the Nth observer select one of the first player and the second player to whom to provide a hint.

14. The hinting method as claimed in claim 9, wherein when any one or more of the first player and the second player leaves a match, the match proceeds in a manner such that a hint having a greatest number of duplicates is determined as a next stone-placing point among hints from the first observer, the second observer, ..., and the Nth observer.

15. The hinting method as claimed in claim 9, further comprising providing match skill information on an observer giving a hint for the first player, the second player, or the observer.
